# EUROPÄISCHE PATENTSCHRIFT

(11) **EP 3 514 118 B1**
(45) Veröffentlichungstag und Bekanntmachung des Hinweises auf die Patenterteilung: **05.08.2020**
(21) Anmeldenummer: 19152243.2
(22) Anmeldetag: 17.01.2019
(51) Int. Cl.: C03B 23/045, C03B 23/11

(54) **ROHRFÄNGER FÜR EINE HEISSFORMMASCHINE UND HEISSFORMMASCHINE**
THERMOFORMING MACHINE AND PIPE CATCHER FOR A THERMOFORMING MACHINE
RECEVEUR DE TUYAUX POUR UNE MACHINE DE MOULAGE À CHAUD ET MACHINE DE MOULAGE À CHAUD

(30) Priorität: 18.01.2018 DE 102018101084
(43) Veröffentlichungstag der Anmeldung: 24.07.2019
(73) Patentinhaber: SCHOTT Schweiz AG, 9001 St. Gallen (CH)
(72) Erfinder: Tremp, Marcel, 9042 Speicher (CH); Scheidbach, Michael, 9213 Hauptwil (CH)
(74) Vertreter: Patent- und Rechtsanwälte Ullrich & Naumann

(56) Entgegenhaltungen:
- US-A- 1 981 692

## Beschreibung

Die Erfindung betrifft einen Rohrfänger für eine Heißformmaschine, umfassend einen Fuß zur Befestigung des Rohrfängers in der Heißformmaschine, eine obere Kontaktfläche zum Auffangen eines Glasrohres beim Fall in die Heißformmaschine, und ein Dämpfungselement, welches unterhalb der Kontaktfläche derart angeordnet ist, dass es ein elastisches Zurückweichen der Kontaktfläche in Richtung der Fallrichtung des Glasrohres erlaubt. Sie betrifft weiter ein Verfahren zum Fangen eines Glasrohres in einer Heißformmaschine sowie eine Heißformmaschine.

Heißformmaschinen der eingangs genannten Art sind dem Fachmann beispielsweise aus der US 1 981 692 A bekannt und dienen der automatisierten Bearbeitung von Glas in mehreren, in der Regel kreisförmig angeordneten Bearbeitungsstationen. Sie weisen üblicherweise auf ihrer Oberseite einen Vorladekranz auf, in den kranzförmig jeweils ein Glasrohr von ca. 1,5 m Länge in eine Vorladeposition eingelegt wird. Das Glasrohr fällt dann an einer definierten Stelle z.B. durch Schieben aus der Vorladeposition über eine entsprechende Öffnung durch ein Haltefutter nach unten und wird dann von den Klemmbacken des Haltefutters fixiert, so dass das Glasrohr um eine bestimmte Länge nach unten über das Haltefutter übersteht. Am nach unten überstehenden offenen Ende wird das Rohrglas bestimmten Bearbeitungsvorgängen unterzogen, die an unterschiedlichen Bearbeitungsstationen durchgeführt werden. Hierzu wird ein oberes Segment der Maschine und mit ihr die Haltefutter um einen bestimmten Winkel von einer Bearbeitungsposition zur nächsten gedreht. Dies erfolgt in einer gegebenen Taktgeschwindigkeit.

Damit das Glasrohr beim Fall vom Vorladekranz nicht beschädigt wird, ist unterhalb des Fallpunktes, d.h. unterhalb des Haltefutters, durch das das Glasrohr fällt, ein Rohrfänger angeordnet. Dieser weist eine ebene Kontaktfläche auf, unter der ein Dämpfungselement angeordnet ist. Das Dämpfungselement ist für eine mechanische Dämpfung ausgebildet, so dass die Kontaktfläche beim Aufprall des Glasrohres elastisch in Richtung der Fallrichtung zurückweicht. Heutige Rohrfänger sind dabei in der Regel so aufgebaut, dass Kontaktfläche und Dämpfungselement einteilig aus einem schwamm- oder gummiartigen Material gebildet sind. Dabei wird für Glasrohre unterschiedlicher Abmessungen und Gewichte gemäß Stand der Technik dasselbe Dämpfungselement eingesetzt.

Nachteilig an den bekannten Rohrfängern ist jedoch, dass noch immer Beschädigungen der Glasrohre beim Aufprall auftreten können. Darüber hinaus hat sich herausgestellt, dass bei einer Erhöhung der Fertigungsgeschwindigkeit Probleme hinsichtlich der exakten Positionierung der Glasrohre für die weitere Bearbeitung bestehen.

Es ist daher Aufgabe der Erfindung, einen Rohrfänger sowie ein Verfahren der eingangs genannten Art anzugeben, die die Beschädigungen an Glasrohren beim Aufprall minimieren, sowie eine hohe Fertigungsgeschwindigkeit erlauben.

Diese Aufgabe wird bezüglich des Rohrfängers erfindungsgemäß gelöst, indem das Dämpfungselement eine komprimierbare Kammer umfasst, die mit einem Gas befüllbar ist.

Bezüglich des Verfahrens wird die Aufgabe durch die folgenden Schritte gelöst:
- Anordnen einer oberen Kontaktfläche und eines unterhalb der Kontaktfläche derart angeordneten Dämpfungselements, dass es ein elastisches Zurückweichen der Kontaktfläche in Richtung der Fallrichtung des Glasrohres erlaubt, unterhalb des Glasrohres,
- Befüllen einer komprimierbaren Kammer im Dämpfungselement mit einem Gas, und
- Fallenlassen des Glasrohres.

Die Erfindung geht dabei von der Überlegung aus, dass insbesondere die Problematik der Positionierung des Glasrohrs bei hohen Verarbeitungsgeschwindigkeiten dadurch entsteht, dass die Glasrohre beim Aufprall auf die Kontaktfläche elastisch zurückprallen und so eine schwer vorhersehbare Schwingung um die gewünschte Endposition eintritt. Bei einer Erhöhung der Taktrate der Heißformmaschine erfolgt das Fixieren des Glasrohres im Haltefutter dann bereits während dieses Nachschwingvorgangs, so dass die Positionierung ungenau wird. Es sollte also ein Dämpfungselement vorgesehen werden, welches ein feinfühligeres Ansprechen und eine weniger federelastische und mehr schwingungsdämpfende Wirkung hat. Hierdurch würde auch die gewünschte Verbesserung der Dämpfungswirkung erreicht werden. Ein derartiges Verhalten ist erreichbar, indem nicht wie bisher die Federwirkung elastischer Körper wie Gummi o.ä. zur Anwendung kommt, sondern vielmehr die Kompressibilität von Gasen genutzt wird. In besonders einfacher Ausgestaltung kann hier insbesondere Luft genutzt werden. Unter der Kontaktfläche sollte daher eine komprimierbare Kammer angeordnet werden, die mit einem Gas befüllbar ist und so die Feder- und Dämpfungswirkung über die Kompressibilität des Gases bereitstellt.

Ein weiteres Problem bisher bekannter Rohrfänger ist die Notwendigkeit des Austauschs des Dämpfungselements bei einer Verwendung anderer Glasrohre, insbesondere solcher Glasrohre mit unterschiedlichen Durchmessern und damit unterschiedlichem Gewicht. Dieser Austausch ist sehr aufwändig und erhöht die Inbetriebnahmezeit bei Veränderung der Art der Glasrohre erheblich. Dieses Problem ist im Zusammenhang mit der Verwendung einer Dämpfung durch Gasdruck bezüglich des Rohrfängers dadurch lösbar, dass dieser vorteilhafterweise eine mit der komprimierbaren Kammer verbundene Druckregelvorrichtung umfasst. Die Druckregelvorrichtung kann beispielsweise als Pumpe mit Druckregelventil ausgebildet sein und dient dazu, den Druck in der Kammer und damit die Dämpfungscharakteristik beliebig einzustellen. Bezüglich des Verfahrens wird das Problem dadurch gelöst, indem das Befüllen mit einem Gas vorteilhafterweise das Einstellen eines vorgegebenen Drucks in der Kammer umfasst, der anhand des Gewichts des Glasrohres bestimmt wird. Hierdurch ist es auf besonders einfache Weise und sehr schnell möglich, durch einfache Einstellung des Luftdrucks in der Kammer den Rohrfänger an unterschiedliche Glasrohrgewichte anzupassen.

In weiterer vorteilhafter Ausgestaltung des Rohrfängers weist dieser einen mit der komprimierbaren Kammer verbundenen Auslasskanal auf. Durch diesen Auslasskanal kann das in der Kammer enthaltene Gas aktiv oder unter dem Außendruck des Gewichts des Rohres aus der Kammer entweichen. Entsprechend wird bei dem Verfahren vorteilhafterweise nach dem Auffangen des Glasrohres auf der Kontaktfläche ein solches Ausströmen des Gases aus der Kammer bewirkt, z.B. durch Öffnen eines Ventils. Hierdurch kann zum Einen die Rückstellkraft während eines Auffangvorgangs reduziert werden, so dass das oben beschriebene elastische Rückfedern minimiert wird. Zum Anderen ist so eine definierte Endposition erreichbar, nämlich in einem komprimierten Zustand der Kammer. Dadurch wird die Positionierungsgenauigkeit weiter erhöht.

In weiterer vorteilhafter Ausgestaltung können auch mehrere Auslasskanäle mit unterschiedlichen Durchmessern und unterschiedlichen Anordnungen derart vorgesehen sein, dass während der Reduktion des Volumens der Kammer bei der Kompression eine progressive Dämpfungscharakteristik erreicht wird. So kann z.B. durch eine entsprechende Überdeckung bzw. Freigabe von Kanaleinlässen bei der Kompression durch entsprechende Anordnung der Wandung die Kompression zu einem späteren Zeitpunkt beschleunigt oder verlangsamt werden.

In Bezug auf den vorgenannten Aspekt der Positionierungsgenauigkeit weist der Rohrfänger in besonders vorteilhafter Ausgestaltung eine Fixierungsvorrichtung auf, die zum Fixieren der Kontaktfläche in einem komprimierten Zustand der Kammer ausgebildet ist. D.h. entweder nach dem oben beschriebenen Ausströmen des Gases oder auch während eines definierten Zeitpunktes des Aufprallvorgangs, in dem die Kammer durch den Impuls des Glasrohres komprimiert ist, wird die Kontaktfläche an einem festgelegten, die Positionierung bestimmenden Punkt z.B. mechanisch fixiert. Bezüglich des Verfahrens wird somit vorteilhafterweise nach dem Auffangen des Glasrohres auf der Kontaktfläche die Kontaktfläche in einem komprimierten Zustand der Kammer fixiert.

In technisch einfacher Weise lässt sich eine solche Fixierung erreichen, indem die Fixierungsvorrichtung einen Magneten umfasst. Dieser kann z.B. neben oder in der Kammer angeordnet sein und durch die magnetische Anziehung einen mit der Kontaktfläche verbundenen ferromagnetischen Körper anziehen und fixieren. Das Fixieren erfolgt bezüglich des Verfahrens also vorteilhafterweise mittels eines Magneten. Eine derartige magnetische Verbindung ist einfach zu gestalten, erlaubt eine starke, einfach wieder lösbare und gleichzeitig schnell und einfach zu aktivierende/deaktivierende Fixierung. Dabei kann entweder ein schaltbarer Elektromagnet verwendet werden, um das Fixieren der Kontaktfläche gezielt zu steuern. In besonders einfacher Ausgestaltung kann jedoch auch ein Permanentmagnet gewählt werden, dessen Magnetkraft so gewählt ist, dass der beim Aufbauen des Gaspolsters entstehende Druck in der Kammer ausreicht, um die Haltkraft des Magneten zu überwinden. Im komprimierten, drucklosen Zustand der Kammer fixiert der Magnet also die Kontaktfläche, durch den Druck des Gaspolsters wird die Verbindung wieder gelöst.

Ein weiterer Gesichtspunkt der vorliegenden Erfindung, der unabhängig von der oben beschriebenen Ausgestaltung des Dämpfungselements mit einer gasbefüllbaren, komprimierbaren Kammer explizit auch mittels eines unabhängigen Patentanspruchs als eigenständige Erfindung beansprucht werden kann, betrifft eine Ausgestaltung des Rohrfängers derart, dass die Kontaktfläche zumindest in Richtung der Fallrichtung des Glasrohres weiter bewegbar in der Heißformmaschine befestigt ist. Bezüglich des Verfahrens wird die Kontaktfläche alternativ oder zusätzlich zum Befüllen der komprimierbaren Kammer im Dämpfungselement mit einem Gas vorteilhafterweise nach dem Auffangen des Glasrohres auf der Kontaktfläche zumindest in Richtung der Fallrichtung des Glasrohres bewegt, wobei das Glasrohr zuvor durch ein Haltefutter fixiert wird.

Dieser Aspekt der Erfindung betrifft nämlich das Problem, dass beim Weitertakten des Glasrohres zur nächsten Position in der Heißformmaschine nach dem Auffangen dessen Unterseite über die Kontaktfläche schleift. Hierbei kann im Extremfall das Glasrohr brechen, so dass die Maschine gestoppt und gereinigt werden muss. Auch können Splitter des Glasrohres abbrechen und die Maschine verschmutzen. Umgekehrt ergibt das Schleifen des Glasrohres auf dem Rohrfänger eine Abnutzung des Materials der Kontaktfläche und damit bei einteiligen Ausführungen von Kontaktfläche und Dämpfungselement auch eine Abnutzung des Dämpfungsmaterials. Dieses muss somit häufiger getauscht werden, was einen Stillstand der Maschine zur Folge hat.

Diese genannten Probleme werden durch die oben beschriebene, selbständig beanspruchbare Ausgestaltung gelöst, nämlich indem das Rohr zunächst durch das Haltefutter gegriffen wird, und nachdem das Rohr im Haltefutter gehalten ist, wird - noch vor dem seitlichen Wegbewegen des Rohrs - der Fuß des Rohrfängers mitsamt Dämpfungselement und Kontaktfläche zumindest in Fallrichtung des Glasrohres (d.h. in beliebiger Richtung mit einer Bewegungskomponente in Fallrichtung) wegbewegt. In der oben beschriebenen Ausgestaltung mit einer komprimierbaren Kammer erfolgt dies während des komprimierten Zustands der Kammer, d.h. es ist neben der Bewegung der Kontaktfläche durch die Kompression der Kammer noch ein zusätzlicher Mechanismus vorgesehen, der eine Weiterbewegung der Kontaktfläche ermöglicht, z.B. durch ein mechanisches Bewegen des Fußes des Rohrfängers selbst oder durch ein Bewegen einer Rückhaltevorrichtung der Kontaktfläche in der Kammer, so dass die Kontaktfläche aus dem komprimierten Zustand der Kammer heraus noch weiter in Fallrichtung bewegt werden kann. Dadurch wird vor der seitlichen Bewegung der Kontakt zwischen Kontaktfläche und Glasrohr getrennt und eine Abnutzung damit vermieden.

Eine Heißformmaschine umfasst vorteilhafterweise einen beschriebenen Rohrfänger.

In vorteilhafter Ausgestaltung, die jedoch explizit auch mittels eines unabhängigen Patentanspruchs vollkommen unabhängig von der oben beschriebenen Ausgestaltung des Rohrfängers als eigenständige Erfindung beansprucht werden kann, umfasst die Heißformmaschine einen drehbar angeordneten Vorladekranz mit einer Vielzahl von radiärsymmetrisch angeordneten Ladepositionen zum Halten jeweils eines senkrecht stehenden Glasrohres, wobei im Vorladekranz für jede der Ladepositionen eine individuell öffenbare Haltevorrichtung für das in der jeweiligen Ladeposition gehaltene Glasrohr vorgesehen ist, und wobei in der Heißformmaschine eine dem Rohrfänger zugeordnete Betätigungsvorrichtung angeordnet ist, die zur Öffnung der Haltevorrichtung derjenigen Ladeposition ausgebildet ist, deren jeweils gehaltenes Glasrohr in einer gegebenen Winkelposition des Vorladekranzes mit der Kontaktfläche des Rohrfängers fluchtet.

Der oben genannten Ausgestaltung liegt das Problem zugrunde, dass bei einer weiteren Steigerung der Taktgeschwindigkeit einer Heißformmaschine es aus mechanischen Gründen nicht mehr möglich ist, in einem Taktschritt, d.h. an einer einzigen Bearbeitungsposition das Glasrohr aus der Vorladeposition zu schieben und sofort durch die Öffnung auf den Rohrfänger fallen zu lassen. Daher ist im Vorladekranz an jeder Stelle eine Haltevorrichtung vorgesehen, die unterhalb des Glasrohres angeordnet ist. So wird das Glasrohr gehalten und fällt nicht direkt nach unten. Das Glasrohr kann also an einer radial und zeitlich vorgelagerten Position in die Ladeposition gebracht werden. Erst zu einem späteren Zeitpunkt wird dann an einer nachgelagerten Position, unter der auch der Rohrfänger angeordnet ist, die Haltevorrichtung geöffnet, so dass das Glasrohr nach unten auf den Rohrfänger fällt. Hierfür ist jede der Haltevorrichtungen individuell betätigbar ausgebildet, die Betätigung muss aber natürlich nur über dem Rohrfänger erfolgen, weswegen eine Betätigungsvorrichtung ausreichend ist.

Im Folgenden werden Weiterbildungen der beschriebenen Heißformmaschine erläutert, die ebenfalls unabhängig von der konkreten, zuvor beschriebenen Ausgestaltung des Rohrfängers sind. Sie können ebenfalls abhängig von einem genannten Patentanspruch beansprucht sein, der ausschließlich auf eine Heißformmaschine unabhängig von der Ausgestaltung des Rohrfängers gerichtet ist.

Vorzugsweise umfasst die jeweilige Haltevorrichtung dabei eine unter eine Öffnung schwenkbare Halteplatte und die Betätigungsvorrichtung umfasst einen Schieber, dessen Bewegung die Halteplatte unter der Öffnung wegschwenkt. Eine derartige Ausgestaltung ist technisch besonders einfach zu realisieren und eignet sich dennoch dazu, das Glasrohr im geschlossenen Zustand sicher zu halten. Zum Öffnen des Haltemechanismus muss lediglich ein z.B. pneumatisch betätigter Schieber so angeordnet sein, dass er die Halteplatte, auf der dann das Glasrohr steht, wegschiebt.

In weiterer vorteilhafter Ausgestaltung weist der Vorladekranz eine Anzahl von Vorladepositionen zum Halten jeweils eines weiteren Glasrohres auf, die der Anzahl der Ladepositionen entspricht, wobei jeder Ladeposition eine Vorladeposition zugeordnet ist, wobei in der Heißformmaschine eine Schiebevorrichtung vorgesehen ist, die dazu ausgebildet ist, an einer gegebenen Winkelposition des Vorladekranzes ein in einer Vorladeposition gehaltenes Glasrohr in die dieser Vorladeposition zugeordnete Ladeposition zu schieben, wobei die Schiebevorrichtung der Betätigungsvorrichtung in Rotationsrichtung des Vorladekranzes vorgeordnet ist. Eine Ausgestaltung des Vorladekranzes mit Vorladepositionen ist im Stand der Technik grundsätzlich bekannt. In diesen ist das Rohr radial außerhalb der eigentlichen Ladeposition schräg eingelegt und wird erst nach dem Einlegevorgang mittels einer ebenfalls vorbekannten Schiebevorrichtung eingeschoben. Im Stand der Technik fallen die Glasrohre jedoch nach dem Schiebevorgang durch die Schiebevorrichtung direkt auf den Rohrfänger, was wie oben erläutert zeitliche Probleme bei einer höheren Taktrate bereitet. In der beschriebenen Ausführung mit individuellen Haltevorrichtungen hingegen kann das Schieben und Fallen in zwei verschiedenen Takten erfolgen. Dazu ist die Schiebevorrichtung der Betätigungsvorrichtung in Rotationsrichtung des Vorladekranzes vorgelagert, d.h. eine gegebene radiale Position erreicht bei der Rotation zuerst die Schiebevorrichtung, die das Glasrohr aus der Vorladeposition in der Regel nach innen auf die Ladeposition schiebt, und erst in einem nachgelagerten Takt erreicht die Position dann die Betätigungsvorrichtung, die die Haltevorrichtung öffnet, so dass das Glasrohr nach unten auf den Rohrfänger fällt.

In noch weiterer vorteilhafter Ausgestaltung ist in der Heißformmaschine eine zweite Betätigungsvorrichtung angeordnet, die zum Schließen der Haltevorrichtung in einer gegebenen Winkelposition des Vorladekranzes ausgebildet ist, wobei die zweite Betätigungsvorrichtung in Rotationsrichtung des Vorladekranzes zwischen erster Betätigungsvorrichtung und Schiebevorrichtung angeordnet ist. Mit anderen Worten: Ist das Glasrohr vollständig durch den Vorladekranz zur Weiterbearbeitung geführt worden, wird die jeweilige Position zur Aufnahme eines neuen Glasrohres bereit gemacht. Dies ist durch die individuellen Haltevorrichtungen wiederum an einer beliebigen Position machbar, die von einer Position des Vorladekranzes in einem dem Öffnen nachfolgenden Takt erreicht wird, jedoch vor einem Takt, in dem ein neues Glasrohr aus der zugeordneten Vorladeposition über die Haltevorrichtung geschoben wird.

Die mit der Erfindung erzielten Vorteile bestehen insbesondere darin, dass durch die Ausgestaltung eines Rohrfängers einer Heißformmaschine für Glas in der Art einer Luftfederung eine besonders sanfte Dämpfung erreicht wird. Risse und Spannungen des Glasrohres, welche einen Einfluss auf das fertige Produkt haben können, werden vermieden. Durch die wenig rückschwingende Federungscharakteristik, insbesondere in Verbindung mit einer Reduzierung des Luftdrucks durch Ausströmen des Gases während des Auffangens wird eine besonders genaue vertikale Positionierung des Rohres erreicht. Die genaue Positionierung wird durch eine insbesondere magnetische Fixierung der Kontaktfläche weiter verbessert.

Durch die separate Ausbildung von Kontaktfläche und Dämpfungselement in Form einer komprimierbaren, gasbefüllbaren Kammer ist das Material für die Kontaktfläche im Gegensatz zu bisherigen einteiligen Ausführungen frei wählbar. Das Material der Kontaktfläche braucht selbst keine dämpfenden Eigenschaften mehr aufzuweisen und kann stattdessen nach anderen Kriterien wie z.B. der Abriebfestigkeit ausgewählt werden. So kann vorteilhafterweise Polyoxymethylen (POM) für die Kontaktfläche verwendet werden.

Darüber hinaus ist eine Luftfederung in Verbindung mit einem regelbaren Gasdruck in der Kammer besonders einfach auf die verschiedenen Gewichte von Glasrohren mit unterschiedlichen Durchmessern einstellbar. Die Wartungszeit bei der Umstellung der Heißformmaschine auf andere Rohrdurchmesser wird dadurch verringert.

Die oben beschriebene Ausgestaltung eines Vorladekranzes mit individuellen Haltevorrichtungen in den Ladepositionen der Glasrohre ermöglicht es, das Schieben des Glasrohres aus einer Vorladeposition in die Ladeposition und das Fallen des Glasrohres auf den Rohrfänger in unterschiedlichen radialen Positionen und Takten der Maschine durchzuführen. Hierdurch eignet sich die Heißformmaschine für höhere Taktraten.

Ausführungsbeispiele der Erfindung werden anhand von Zeichnungen näher erläutert. Darin zeigen:
- FIG 1: in einer schematischen Aufsicht Teile einer Heißformmaschine,
- FIG 2A -2D: einen zeitlichen Ablauf des Auffangprozesses des Rohrfängers,
- FIG 3: ein schematisches Diagramm der vertikalen Position des Rohrfängers beim Auffangprozess, aufgetragen gegen die Zeit im Vergleich mit dem Stand der Technik,
- FIG 4: in einer schematischen Aufsicht Teile des unteren Vorladekranzes der Heißformmaschine von unten,
- FIG 5: einen Ausschnitt der FIG 4 mit geschlossenen Haltevorrichtungen,
- FIG 6: einen Ausschnitt der FIG 4 mit geöffneten Haltevorrichtungen, und
- FIG 7A-C: einen zeitlichen Ablauf des Schiebeprozesses aus einer Vorladeposition in eine Ladeposition in seitlicher Ansicht.

Gleiche Teile sind in allen Zeichnungen mit denselben Bezugszeichen versehen.

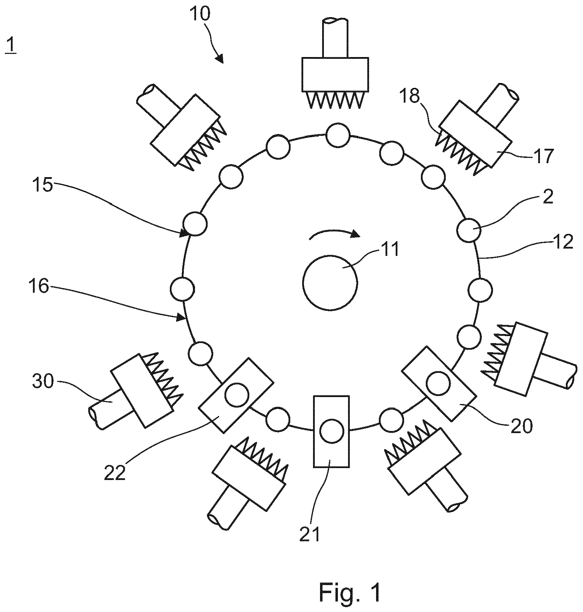

Die Fig. 1 zeigt in einer schematischen Aufsicht den grundsätzlichen Aufbau einer Heißformmaschine 1, die der Herstellung von Glasbehältnissen aus einem Glasrohr 2 dient, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung von pharmazeutischen Wirkstoffen. Die Heißformmaschine 1 umfasst dabei eine sog. Muttermaschine 10, die insbesondere einer Heißumformung des zugeführten Glasrohrs 2 an einem dem späteren Boden oder offenen Ende des Glasbehältnisses gegenüberliegenden Ende dient, insbesondere zum Anformen eines Halses mit einer Halsöffnung.

Glasrohre 2 werden an der Zuführposition 15 aus einem in FIG 1 nicht dargestellten Vorladekranz zugeführt. Sie fallen dabei durch Öffnen einer Haltevorrichtung im Vorladekranz nach unten, werden durch einen noch im folgenden zu beschreibenden Rohrfänger aufgefangen und dann in Haltefuttern auf einer geeigneten Bearbeitungshöhe gehalten, die über den Umfang eines Drehtisches 12 verteilt angeordnet sind. Der Drehtisch 12 ist in der Art eines Drehkranzes mit Haltefuttern ausgebildet und ist an der zugeordneten Säule 11 drehbeweglich gelagert. Der Drehtisch 12 wird schrittweise um die zugeordnete Säule 11 gedreht bzw. geschwenkt. Dabei werden die an den Haltefuttern gehaltenen Glasrohre 2 schrittweise an Gasbrennern 17 und verschiedenen Bearbeitungsstationen 20-22 vorbeigeführt, an denen während einer jeweiligen Stillstandszeit die Bearbeitung und Heißumformung zu den Glasbehältnissen erfolgt.

Nach Passieren der Bearbeitungsstationen 20-22 werden die Glasbehältnisse zumindest im Bereich des Halses und der Halsöffnung nicht-taktil mit Hilfe eines Inspektionssystems 30 geprüft und ihre Eigenschaften dokumentiert. Bei dem Inspektionssystem 30 kann es sich beispielsweise um eine Videokamera mit einer Bildauswertungssoftware handeln, womit anhand der von der Videokamera aufgenommenen Bilder geometrischen Abmessungen der Glasbehältnisse ausgewertet werden, beispielsweise im Falle von Glasvials die geometrischen Abmessungen. Abschließend werden die Glasbehältnisse an der Position 16 an eine nachgeordnete Bearbeitungsmaschine übergeben.

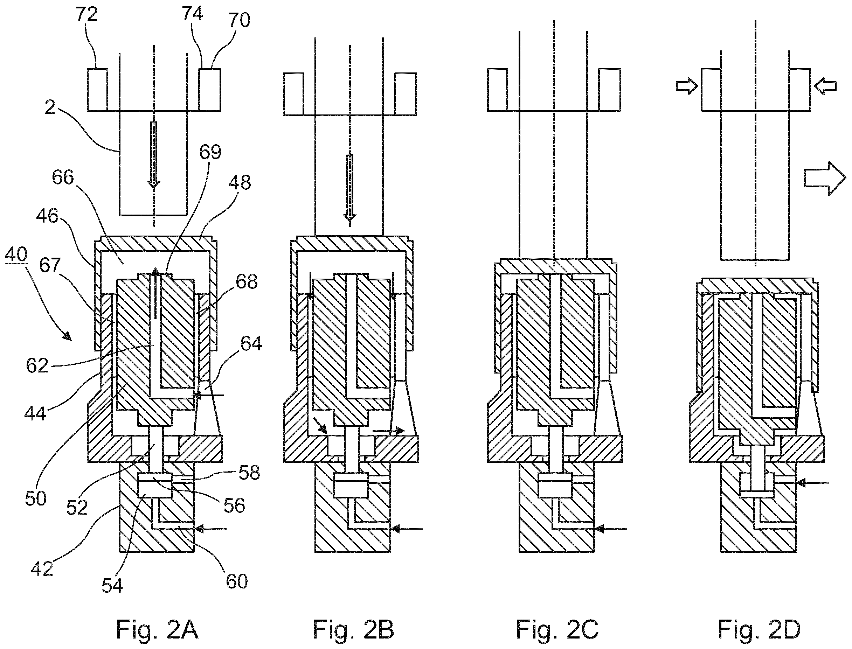

Die FIG 2A-D zeigen einen zeitlichen Ablauf des Auffangens des Glasrohres 2 durch einen Rohrfänger 40 nach dem Fallenlassen aus dem Vorladekranz, wie oben beschrieben. Die FIG 2A-D zeigt dabei eine Ansicht aus radialer Richtung der FIG 1, wobei der Rohrfänger 40 im Schnitt dargestellt ist. Aus Gründen der Übersichtlichkeit ist nur FIG 2A mit Bezugszeichen versehen, da die FIG 2B-D denselben Rohrfänger 40 lediglich zu anderen Zeitpunkten des Auffangprozesses zeigen. Zunächst wird der Aufbau der Rohrfängers 40 erläutert und anschließend auf den zeitlichen Ablauf des Auffangprozesses eingegangen.

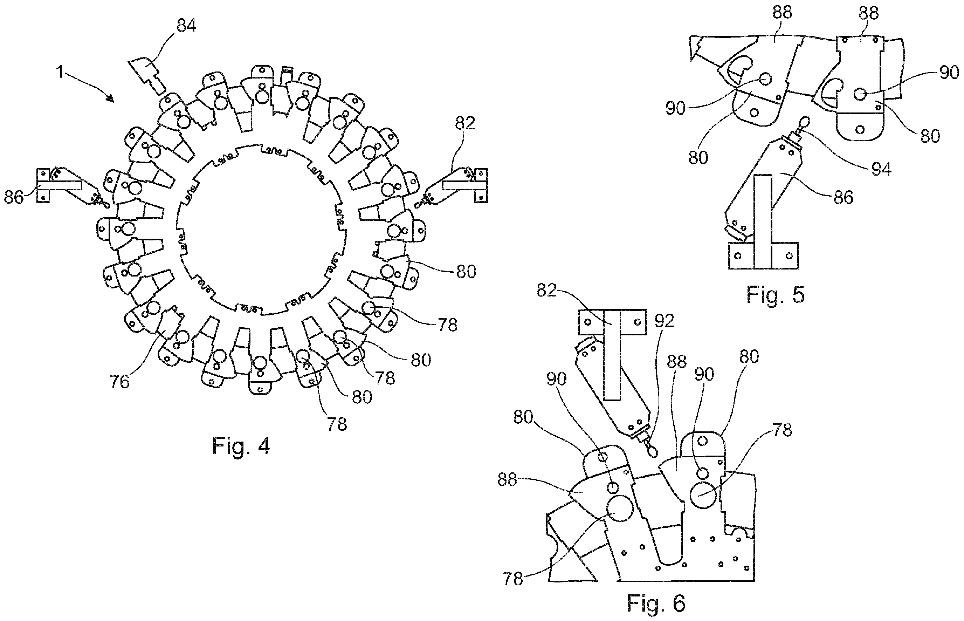

Der Rohrfänger 40 weist einen Fuß 42 auf, mit dem er noch näher zu FIG 4 beschrieben in der Heißformmaschine 1 befestigt ist. Am Fuß 42 ist, konzentrisch zum Glasrohr 2 ein nach oben offener Zylindertopf 44 angeordnet. Auf den Zylindertopf 44 ist eine an die Außenwand des Zylindertopfes 44 formbündig dimensionierte, ebenfalls zylindrische und nach oben geschlossene Hülse 46 gestülpt. Der nach oben geschlossene Deckel der Hülse 46 bildet eine ebene Kontaktfläche 48, auf die das Glasrohr 2 beim Herunterfallen aus dem Vorladekranz eben auftrifft. Die Kontaktfläche 48 selbst ist aus einem Material gefertigt oder mit einem Material beschichtet, das insbesondere hinsichtlich seiner Abriebfestigkeit optimiert ist, im Ausführungsbeispiel POM.

Im Inneren des Zylindertopfes 44 ist konzentrisch ein Kolben 50 angeordnet, der zwar zylinderförmig ausgestaltet ist, dessen Außendurchmesser aber geringfügig geringer ist als der Innendurchmesser des Zylindertopfes 44. Der Kolben 50 wird stattdessen durch eine durch den Boden des Zylindertopfes 44 stoßende Kolbenstange 52 geführt, so dass er nur in vertikaler Richtung beweglich ist. Im Fuß 42 mündet die Kolbenstange 52 in eine zylindrische Kammer 54, wo sie mit einer konzentrisch angeordneten, kreisförmigen Scheibe 56 verbunden ist, deren Durchmesser dem Durchmesser der Kammer 54 entspricht. Die Kolbenstange 52 ist somit in axialer Richtung jeweils soweit bewegbar, bis die Scheibe 56 an eine der axialen Begrenzungsflächen der Kammer 54 stößt. Im Fuß 42 sind dabei sind dabei zwei Luftzuführleitungen 58, 60 angeordnet, von denen die erste Luftzuführleitung 58 im Bereich des Deckels der Kammer 54, die andere im Zentrum des Bodens der Kammer 54 mündet. Die Luftzuführleitungen 58, 60 sind von außerhalb des Fußes 42 mit Druckluft beaufschlagbar. Durch die beschriebene Geometrie mündet die Luftzuführleitung 58 oberhalb der Scheibe 56 in die Kammer 54, so dass durch Beaufschlagung der Luftzuführleitung 58 die Scheibe 56 und damit der Kolben 50 nach unten gedrückt wird, bis die Scheibe 56 an den Boden der Kammer 54 stößt. Umgekehrt wird durch Beaufschlagung der Luftzuführleitung 60, die im Boden der Kammer 54 mündet, die Scheibe 56 und damit der Kolben 50 nach oben gedrückt, bis die Scheibe 56 an den Deckel der Kammer 54 stößt.

In der Achse des Kolbens 50 ist eine weitere Luftzuführleitung 62 angeordnet, die unterhalb der Hülse 46 mündet und seitlich durch eine Öffnung 64 in der Wandung des Zylindertopfes 44 regelbar mit Druckluft beaufschlagbar ist. Die entsprechenden pneumatischen Einrichtungen wie Pumpen, Schläuche und Ventile sind in den Zeichnungen nicht abgebildet. Sie sind aber vorhanden und sind von einer Steuerungselektronik bedarfsweise ansteuerbar. Insbesondere die Zuführleitung 62 ist regelbar mit Druckluft beaufschlagbar, so dass in der über dem Kolben 50 gebildeten, oberhalb und radial durch die Hülse 46 begrenzten Kammer 66 ein definierter Druck einstellbar ist. Der Zwischenraum zwischen Außendurchmesser des Kolbens 50 und Innendurchmesser des Zylindertopfes 44 bildet dabei Auslasskanäle 67, 68, durch die Druckluft aus der Kammer 66 entweichen kann. Das Einstellen eines bestimmten Druckes in der Kammer 66 erfordert daher eine ständige Nachfuhr von Luft durch die Luftzuführleitung 62. In anderen, nicht gezeigten Ausführungsbeispielen können die Auslasskanäle 67, 68 komplexer ausgebildet sein, z.B. aus noch mehreren Auslasskanälen mit unterschiedlichen Durchmessern oder mit variierendem Querschnitt je nach axialer Position (z.B. durch eine konische Ausbildung von Kolben 50 und Innenseite des Zylindertopfes 44 oder durch weitere Auslasskanäle, die sich nicht über die gesamte Höhe erstrecken), so dass eine progressive Dämpfungscharakteristik erreicht wird.

Am Austritt der Luftzuführleitung 62 ist ein Magnet 69 angeordnet, der als Permanentmagnet ausgebildet ist und dessen Stärke so gewählt ist, dass der Druck des Luftpolsters in der Kammer 66 bedarfsweise ausreicht, um die magnetische Verbindung zu lösen. Die Innenseite des Deckels der Hülse 46 ist über dem Magnet 69 ferromagnetisch, so dass sie bei Komprimierung der Kammer 66 am Magneten 69 bei genügend geringem Abstand anhaftet. Oberhalb des Rohrfängers 40 ist darüber hinaus in der Heißformmaschine 1 wie bereits zu FIG 1 beschrieben ein Haltefutter 70 angeordnet, das ebenfalls von der Steuerelektronik bedarfsweise angesteuert wird, um das Glasrohr mittels der Klemmbacken 72, 74 des Haltefutters 70 zu ergreifen und zu halten.

Nachdem nur der Aufbau des Rohrfängers 40 und des darüber angeordneten Haltefutters 70 beschrieben wurde, wird im Folgenden anhand der FIG 2A-D der Ablauf des Auffangvorgangs erläutert. In einer ersten Phase, dargestellt in FIG 2A wird Luft durch die Luftzuführleitung 60 zugeführt, so dass der Kolben 50 in einer oberen Position fixiert ist. Durch die Luftzufuhrleitung 60 wird ebenfalls Luft mit definierter Luftmenge zugeführt, so dass sich in der Kammer 66 ein vorgegebener Druck einstellt. Dieser Druck wird anhand des Rohrgewichts des Glasrohres 2 bestimmt und ist auf verschiedene Rohrgewichte einstellbar. In der Phase der FIG 2A ist der Druck in der Kammer 66 ausreichend, um den Deckel vom Magneten 69 zu lösen, und die Klemmbacken 70, 72 sind geöffnet. Das Glasrohr 2 fällt nach unten in Richtung der Kontaktfläche 48.

Im Folgenden werden zu den FIG 2B-D nur Veränderungen der Steuergrößen beschrieben. Nicht beschriebene Steuergrößen bleiben unverändert.

In FIG 2B trifft das Glasrohr 2 auf die Kontaktfläche 48. Durch die Elastizität der Luft in der Kammer 66 wird diese komprimiert, so dass der Fall des Glasrohres 2 durch das elastische Zurückweichen der Kontaktfläche 48 sanft gebremst wird. Zu diesem Zeitpunkt wird die Luftzufuhr durch den Luftzufuhrkanal 60 zudem beendet, so dass der Druck in der Kammer 66 noch weiter sinkt und die Kammer 66 weiter komprimiert wird, da die verbleibende Luft durch die Auslasskanäle 67, 68 entweicht. Der Endzustand der Kompression ist in FIG 2C gezeigt, wenn nämlich der Deckel der Hülse 46 auf die Oberseite des Kolbens 50 trifft. Die Kompression der Kammer 66 ist dann maximal. Der Magnet 69 fixiert den Deckel der Hülse 46 mit der Kontaktfläche 48 am Kolben 50.

In dem in FIG 2C gezeigten Zustand hat das Glasrohr 2 eine definierte vertikale Positionierung. Als nächsten Schritt werden daher die Klemmbacken 70, 72 geschlossen, so dass das Glasrohr 2 für die weitere Bearbeitung in der Heißformmaschine 1 gegriffen wird. Sodann wird die Luftzufuhr in die Luftzuführleitung 60 beendet und stattdessen Luft in die Luftzuführleitung 58 geleitet. Dadurch sinkt der Kolben 50, zunächst unter dem Einfluss der Schwerkraft, dann auch durch den über der Scheibe 56 in der Kammer 54 bestehenden Druck nach unten. Da der Magnet 69 den Deckel fixiert, bewegen sich mit dem Kolben 50 auch die Hülse 46 und damit die Kontaktfläche 48 nach unten. Da das Glasrohr 2 vom Haltefutter 70 gehalten wird, bewegt sich somit die Kontaktfläche 48 vom Glasrohr 2 in Fallrichtung des Glasrohres 2 weg. Das Glasrohr 2 wird dann in der zu FIG 1 beschriebenen Weise radial in der Heißformmaschine weiter zu den weiteren Bearbeitungsstationen bewegt. Die Luftzufuhr zu den Luftzuführleitungen 60, 62 wird wie zuvor wieder aktiviert, so dass sich die Kammer 66 wieder ausdehnt. Der Rohrfänger 50 ist somit für das Fangen des nächsten Rohres bereit.

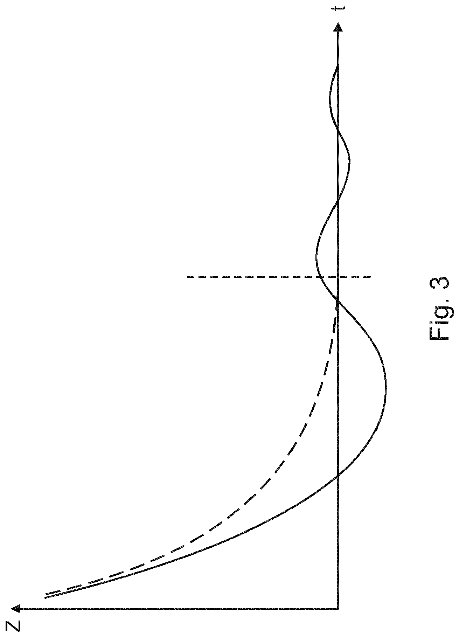

FIG 3 zeigt die Vertikalposition des Glasrohres 2 während des oben beschriebenen Auffangvorgangs im Vergleich zum Stand der Technik, aufgetragen gegen die Zeit. Die durchgezogene Linie zeigt die Vertikalposition des Glasrohres 2 in Auffangvorgängen nach dem Stand der Technik, z.B. durch eine Kontaktfläche und einen Dämpfer aus einem gummiartigen Material. Dieses Material federt zurück, so dass die Vertikalposition einen um die Endposition oszillierenden Verlauf mit nach und nach kleiner werdender Amplitude aufweist. Im Gegensatz dazu zeigt die gestrichelte Linie den Verlauf der Vertikalposition nach dem Auffangvorgang, der in FIG 2A-D beschrieben wurde. Dieser verläuft streng monoton und asymptotisch bis zu einer Ruheposition, die auch wesentlich früher erreicht wird als im Stand der Technik.

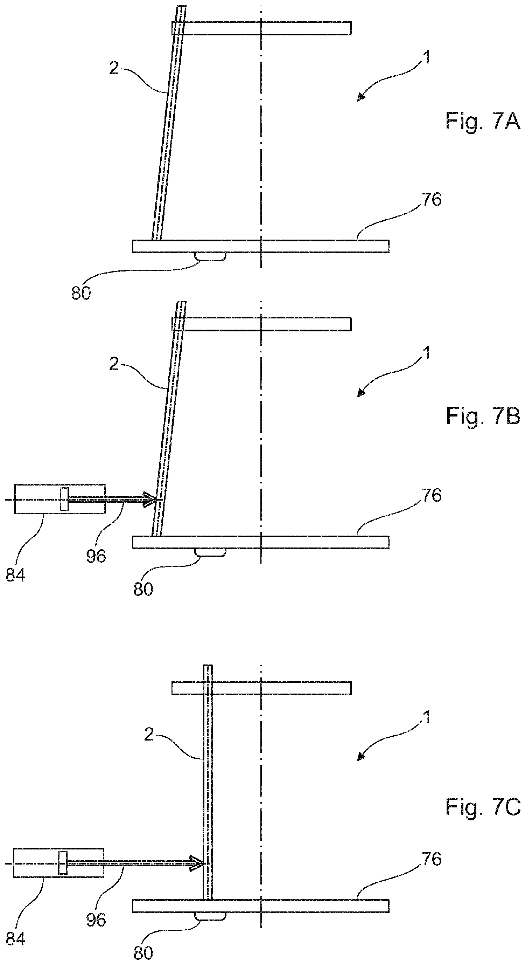

FIG 4 zeigt schließlich einen unteren Vorladekranz 76 einer Heißformmaschine 1 auf. Der Vorladekranz 76 nach der FIG 4 weist eine 20-fache Radiärsymmetrie auf, ist also für eine Heißformmaschine mit zwanzig Bearbeitungspositionen ausgestaltet, im Gegensatz zur Heißformmaschine 1 nach FIG 1, die sechzehn Bearbeitungspositionen aufweist. Auf dem gezeigten Vorladekranz 76 ist in jeder der zwanzig Positionen eine Vorladeposition und eine Ladeposition für ein Glasrohr 2 definiert, die noch näher zu FIG 7A-C erläutert werden. In der Ladeposition fluchtet das senkrecht stehende Glasrohr 2 jeweils mit einer der zwanzig Öffnungen 78, die jeweils Teil einer der zwanzig individuell betätigbaren Haltevorrichtungen 80 sind. FIG 4 zeigt den Vorladekranz 76 von unten; die Funktion der Haltevorrichtungen 80 und ihre Betätigung wird noch in FIG 5 und 6 erläutert.

In FIG 4 sind die Haltevorrichtungen 80 alle geöffnet, so dass die Öffnungen 78 sichtbar sind. Der Vorladekranz 76 ist für eine Rotation gegen den Uhrzeigersinn ausgebildet (in FIG 4 von unten gesehen). Eine gegebene Öffnung 78 und Haltevorrichtung 80 passiert dabei zunächst eine in der Heißformmaschine 1 fest angeordnete, nicht mitrotierende Betätigungsvorrichtung 82, die die jeweilige Haltevorrichtung 80 schließt, wie dies noch zu FIG 5 beschrieben wird. Nach einigen Taktschritten erreicht die jeweilige Haltevorrichtung 80 dann eine Position, in der eine Schiebevorrichtung 84 angeordnet ist, die ein Glasrohr 2 aus eine Vorladeposition nach innen in die Ladeposition schiebt, so dass das Glasrohr 2 senkrecht über der Haltevorrichtung 80 in der nun verschlossenen Öffnung 78 steht.

Erst einige Takte später, nach dem der Vorladekranz um drei Positionen weiter gerückt ist, erreicht die jeweilige Haltevorrichtung 80 dann eine Position, in der eine weitere Betätigungsvorrichtung 86 angeordnet ist, die die jeweilige Haltevorrichtung 80 öffnet, wie dies noch zu FIG 6 beschrieben wird. Das Glasrohr 2 fällt dann durch die Öffnung 78 in der bereits zu FIG 2 beschriebenen Weise auf den Rohrfänger 40, oder - in anderen Ausführungsbeispielen - auf einen anderen Rohrfänger, wie er aus dem Stand der Technik bekannt ist.

FIG 5 und 6 zeigen je einen Ausschnitt der FIG 4, FIG 5 im Bereich der Betätigungsvorrichtung 86, FIG 6 im Bereich der Betätigungsvorrichtung 82. Wie in FIG 5 und 6 erkennbar, umfasst jede Haltevorrichtung 80 eine Halteplatte 88, die um je eine Achse 90 schwenkbar gelagert ist. Die Halteplatte 88 weist eine kreisrunde Öffnung auf, die in der in FIG 6 geöffneten Position der Halteplatte 88 mit der jeweiligen Öffnung 78 fluchtet. In der in FIG 5 gezeigten geschlossenen Position der Halteplatte 88 verschließt diese die Öffnung 78. jede der Betätigungsvorrichtungen 82, 86 umfasst jeweils einen pneumatisch betätigten Schieber 92, 94, die jeweils so angeordnet sind, dass sie auf unterschiedlichen Seiten gegen die Halteplatte 88 drücken und diese so in die geöffnete bzw. geschlossene Position verschieben.

Die FIG 7A-C zeigen schließlich in einer seitlichen Ansicht den Vorgang des Schiebens des Glasrohrs 2 aus der Vorladeposition in die Ladeposition, wie oben erläutert. FIG 7A-C zeigen eine schematische Seitenansicht des oberen Teils der Heißformmaschine 1. In FIG 7A befindet sich das Glasrohr 2 schräg in einer radial weiter außen angeordneten Vorladeposition. In FIG 7B erreicht der Vorladekranz in einem gegebenen Takt die Position, in der die Schiebevorrichtung 84 angeordnet ist. Diese weist einen Schieber 96 auf, der exakt radial nach innen ausgerichtet ist und - ebenfalls pneumatisch betätigt - das Glasrohr 4 auf die Haltevorrichtung 80 in eine Ladeposition schiebt, wie in FIG 7C gezeigt. Zu einem späteren Zeitpunkt in einem späteren Takt der Rotation wird dann die Haltevorrichtung 80 geöffnet, wie oben beschrieben.

In Ausführungsformen der Erfindung kann die zu FIG 1 und FIG 4-7C beschriebene Heißformmaschine 1 auch mit einem Rohrfänger nach dem Stand der Technik ausgebildet sein, der nicht gemäß der Ausführungsform nach FIG 2 ausgestaltet ist.

### Bezugszeichenliste

- 1: Heißformmaschine
- 2: Glasrohr oder halbfertiges Zwischenprodukt
- 5: Vial
- 6: zylindrische Seitenwand
- 7: Schulter
- 8: Hals
- 9: Rollrand
- 10: Muttermaschine
- 11: Säule mit Antrieb
- 12: Drehtisch
- 15: Zuführabschnitt
- 16: Übergabeabschnitt
- 17: Gasbrenner
- 18: Brennerflamme
- 20: erster Heißumformungsabschnitt
- 21: zweiter Heißumformungsabschnitt
- 22: dritter Heißumformungsabschnitt
- 30: nicht-taktiles Inspektionssystem, z.B. Videokamera
- 40: Rohrfänger
- 42: Fuß
- 44: Zylindertopf
- 46: Hülse
- 48: Kontaktfläche
- 50: Kolben
- 52: Kolbenstange
- 54: Kammer
- 56: Scheibe
- 58, 60, 62: Luftzuführleitung
- 64: Öffnung
- 66: Kammer
- 67, 68: Auslasskanal
- 69: Magnet
- 70: Haltefutter
- 72, 74: Klemmbacken
- 76: unterer Vorladekranz
- 78: Öffnung
- 80: Haltevorrichtung
- 82: Betätigungsvorrichtung
- 84: Schiebevorrichtung
- 86: Betätigungsvorrichtung
- 88: Halteplatte
- 90: Achse
- 92, 94, 96: Schieber

## Patentansprüche

1. Rohrfänger (40) für eine Heißformmaschine (1), umfassend
einen Fuß zur Befestigung des Rohrfängers (40) in der Heißformmaschine (1),
eine obere Kontaktfläche (48) zum Auffangen eines Glasrohres (2) beim Fall in die Heißformmaschine (1), und
ein Dämpfungselement, welches unterhalb der Kontaktfläche (48) derart angeordnet ist, dass es ein elastisches Zurückweichen der Kontaktfläche (48) in Richtung der Fallrichtung des Glasrohres (2) erlaubt, wobei das Dämpfungselement eine komprimierbare Kammer (66) umfasst, die mit einem Gas befüllbar ist.

2. Rohrfänger (40) nach dem vorhergehenden Anspruch, weiter umfassend eine mit der komprimierbaren Kammer (66) verbundene Druckregelvorrichtung.

3. Rohrfänger (40) nach einem der vorhergehenden Ansprüche mit einem mit der komprimierbaren Kammer (66) verbundenen Auslasskanal (67, 68).

4. Rohrfänger (40) nach einem der vorhergehenden Ansprüche mit einer Fixierungsvorrichtung, ausgebildet zum Fixieren der Kontaktfläche (48) in einem komprimierten Zustand der Kammer (66).

5. Rohrfänger (40) nach dem vorhergehenden Anspruch, bei dem die Fixierungsvorrichtung einen Magneten (69) umfasst.

6. Rohrfänger (40) nach einem der vorhergehenden Ansprüche, bei dem die Kontaktfläche (48) im komprimierten Zustand der Kammer (66) zumindest in Richtung der Fallrichtung des Glasrohres (2) weiter bewegbar in der Heißformmaschine (1) befestigt ist.

7. Verfahren zum Fangen eines Glasrohres (2) in einer Heißformmaschine (1), mit den Schritten:
- Anordnen einer oberen Kontaktfläche (48) und eines unterhalb der Kontaktfläche (48) derart angeordneten Dämpfungselements, dass es ein elastisches Zurückweichen der Kontaktfläche (48) in Richtung der Fallrichtung des Glasrohres (2) erlaubt, unterhalb des Glasrohres (2),
- Befüllen einer komprimierbaren Kammer (66) im Dämpfungselement mit einem Gas, und
- Fallenlassen des Glasrohres (2).

8. Verfahren nach dem vorhergehenden Verfahrensanspruch, bei dem das Befüllen mit einem Gas das Einstellen eines vorgegebenen Drucks in der Kammer (66) umfasst, der anhand des Gewichts des Glasrohres (2) bestimmt wird.

9. Verfahren nach einem der vorhergehenden Verfahrensansprüche, bei dem nach dem Auffangen des Glasrohres (2) auf der Kontaktfläche (48) ein Ausströmen des Gases aus der Kammer (66) bewirkt wird.

10. Verfahren nach einem der vorhergehenden Verfahrensansprüche, bei dem nach dem Auffangen des Glasrohres (2) auf der Kontaktfläche (48) die Kontaktfläche (48) in einem komprimierten Zustand der Kammer (66) fixiert wird.

11. Verfahren nach dem vorhergehenden Verfahrensanspruch, bei dem das Fixieren mittels eines Magneten (69) erfolgt.

12. Verfahren nach einem der vorhergehenden Ansprüche, bei dem die Kontaktfläche (48) im komprimierten Zustand der Kammer (66) nach dem Auffangen des Glasrohres (2) auf der Kontaktfläche (48) zumindest in Richtung der Fallrichtung des Glasrohres (2) weiter bewegt wird, wobei das Glasrohr (2) zuvor durch ein Haltefutter (70) fixiert wird.

13. Heißformmaschine (1) mit einem Rohrfänger (40) nach einem der Ansprüche 1 bis 6.

14. Heißformmaschine (1) nach Anspruch 13, weiter umfassend einen drehbar angeordneten Vorladekranz (76) mit einer Vielzahl von radiärsymmetrisch angeordneten Ladepositionen zum Halten jeweils eines senkrecht stehenden Glasrohres (2),
wobei im Vorladekranz (76) für jede der Ladepositionen eine individuell öffenbare Haltevorrichtung (80) für das in der jeweiligen Ladeposition gehaltene Glasrohr (2) vorgesehen ist, und
wobei in der Heißformmaschine (1) eine dem Rohrfänger (40) zugeordnete Betätigungsvorrichtung (86) angeordnet ist, die zur Öffnung der Haltevorrichtung (80) derjenigen Ladeposition ausgebildet ist, deren jeweils gehaltenes Glasrohr (2) in einer gegebenen Winkelposition des Vorladekranzes (76) mit der Kontaktfläche (48) des Rohrfängers (40) fluchtet.

15. Heißformmaschine (1) nach Anspruch 14, bei der die jeweilige Haltevorrichtung (80) eine unter eine Öffnung (78) schwenkbare Halteplatte (88) umfasst und die Betätigungsvorrichtung (86) einen Schieber (94) umfasst, dessen Bewegung die Halteplatte (88) unter der Öffnung (78) wegschwenkt.

16. Heißformmaschine (1) nach Anspruch 13 oder 14, bei der der Vorladekranz (76) eine Anzahl von Vorladepositionen zum Halten jeweils eines weiteren Glasrohres (2)aufweist, die der Anzahl der Ladepositionen entspricht, wobei jeder Ladeposition eine Vorladeposition zugeordnet ist,
wobei in der Heißformmaschine (1) eine Schiebevorrichtung (84) vorgesehen ist, die dazu ausgebildet ist, an einer gegebenen Winkelposition des Vorladekranzes (76) ein in einer Vorladeposition gehaltenes Glasrohr (2) in die dieser Vorladeposition zugeordnete Ladeposition zu schieben,
wobei die Schiebevorrichtung (84) der Betätigungsvorrichtung (86) in Rotationsrichtung des Vorladekranzes (76) vorgeordnet ist.

17. Heißformmaschine (1) nach Anspruch 16, in der eine zweite Betätigungsvorrichtung (82) angeordnet ist, die zum Schließen der Haltevorrichtung (80) in einer gegebenen Winkelposition des Vorladekranzes (76) ausgebildet ist, wobei die zweite Betätigungsvorrichtung (82) in Rotationsrichtung des Vorladekranzes (76) zwischen erster Betätigungsvorrichtung (86) und Schiebevorrichtung (84) angeordnet ist.

## Claims

1. Pipe catcher (40) for a hot-forming machine (1),
comprising
a base for securing the pipe catcher (40) in the hot-forming machine (1),
an upper contact face (48) for catching a glass pipe (2) when it falls into the hot-forming machine (1), and
a damping element which is arranged below the contact face (48) in such a manner that it enables a resilient retraction of the contact face (48) in the direction of the falling direction of the glass pipe (2), wherein the damping element comprises a compressible chamber (66) which can be filled with a gas.

2. Pipe catcher (40) according to the preceding claim, further comprising a pressure control device which is connected to the compressible chamber (66).

3. Pipe catcher (40) according to either of the preceding claims, having an outlet channel (67, 68) which is connected to the compressible chamber (66).

4. Pipe catcher (40) according to any one of the preceding claims, having a fixing device which is constructed for fixing the contact face (48) in a compressed state of the chamber (66).

5. Pipe catcher (40) according to the preceding claims, wherein the fixing device comprises a magnet (69).

6. Pipe catcher (40) according to any one of the preceding claims, wherein the contact face (48) in the compressed state of the chamber (66) is secured so as to be able to be moved further in the hot-forming machine (1) at least in the direction of the falling direction of the glass pipe (2).

7. Method for catching a glass pipe (2) in a hot-forming machine (1), having the steps of:
- arranging an upper contact face (48) and a damping element, which is arranged below the contact face (48) in such a manner that it enables a resilient retraction of the contact face (48) in the direction of the falling direction of the glass pipe (2), below the glass pipe (2),
- filling a compressible chamber (66) in the damping element with a gas, and
- allowing the glass pipe (2) to fall.

8. Method according to the preceding method claim,
wherein the filling with a gas involves the adjustment in the chamber (66) of a predetermined pressure which is determined by means of the weight of the glass pipe (2).

9. Method according to any one of the preceding method claims, wherein, after the glass pipe (2) has been caught on the contact face (48), a discharge of the gas from the chamber (66) is brought about.

10. Method according to any one of the preceding method claims, wherein, after the glass pipe (2) has been caught on the contact face (48), the contact face (48) is fixed in a compressed state of the chamber (66).

11. Method according to the preceding method claim, wherein the fixing is carried out by means of a magnet (69).

12. Method according to any one of the preceding claims, wherein the contact face (48) in the compressed state of the chamber (66) after the glass pipe (2) has been caught on the contact face (48) is moved further at least in the direction of the falling direction of the glass pipe (2),
wherein the glass pipe (2) is previously fixed by means of a retention chuck (70).

13. Hot-forming machine (1) having a pipe catcher (40) according to any one of claims 1 to 6.

14. Hot-forming machine (1) according to claim 13, further comprising a rotatably arranged preloading ring (76) having a large number of loading positions which are arranged in a radially symmetrical manner for retaining a perpendicular glass pipe (2) in each case,
wherein a retention device (80) which can be individually opened for the glass pipe (2) which is retained in the respective loading position is provided in the preloading ring (76) for each of the loading positions, and
wherein there is arranged in the hot-forming machine (1) an actuation device (86) which is associated with the pipe catcher (40) and which is constructed to open the retention device (80) of the loading position whose retained glass pipe (2) in a specific angular position of the preloading ring (76) is in alignment with the contact face (48) of the pipe catcher (40), respectively.

15. Hot-forming machine (1) according to claim 14, wherein the respective retention device (80) comprises a retention plate (88) which can be pivoted below an opening (78) and the activation device (86) comprises a sliding member (94) whose movement pivots away the retention plate (88) below the opening (78).

16. Hot-forming machine (1) according to claim 13 or claim 14, wherein the preloading ring (76) has a number of preloading positions for retaining another glass pipe (2) which corresponds to the number of loading positions, wherein each loading position is associated with a preloading position,
wherein there is provided in the hot-forming machine (1) a sliding device (84) which is constructed, at a specific angular position of the preloading ring (76), to slide a glass pipe (2) which is retained in a preloading position into the loading position associated with this preloading position,
wherein the sliding device (84) of the actuation device (86) is arranged upstream in the rotation direction of the preloading ring (76).

17. Hot-forming machine (1) according to claim 16, in which there is arranged a second actuation device (82) which is constructed to close the retention device (8) in a specific angular position of the preloading ring (76), wherein the second actuation device (82) is arranged in the rotation direction of the preloading ring (76) between the first actuation device (86) and the sliding device (84).

## Revendications

1. Préhenseur de tube (40) pour une machine de moulage à chaud (1), comprenant un pied pour la fixation du préhenseur de tube (40) dans la machine de moulage à chaud (1),
une surface de contact (48) supérieure pour la capture d'un tube en verre (2) lors de la chute dans la machine de moulage à chaud (1),
et
un élément amortisseur, lequel est disposé au-dessous de la surface de contact (48) de telle sorte qu'il permet un recul élastique de la surface de contact (48) en direction de la direction de chute du tube en verre (2), l'élément amortisseur comprenant une chambre (66) compressible pouvant être remplie avec un gaz.

2. Préhenseur de tube (40) selon la revendication précédente, comprenant également un dispositif de réglage de pression raccordé à la chambre (66) compressible.

3. Préhenseur de tube (40) selon l'une des revendications précédentes, avec un canal de sortie (67, 68) raccordé à la chambre (66) compressible.

4. Préhenseur de tube (40) selon l'une des revendications précédentes, avec un dispositif de fixation, constitué pour la fixation de la surface de contact (48) dans un état comprimé de la chambre (66).

5. Préhenseur de tube (40) selon la revendication précédente, dans lequel le dispositif de fixation comprend un aimant (69).

6. Préhenseur de tube (40) selon l'une des revendications précédentes, dans lequel la surface de contact (48), dans l'état comprimé de la chambre (66), est fixée de façon à pouvoir être déplacée plus loin dans la direction de la direction de chute du tube en verre (2) dans la machine de moulage à chaud (1).

7. Procédé de préhension d'un tube en verre (2) dans une machine de moulage à chaud (1), comprenant les étapes :
- disposition d'une surface de contact (48) supérieure et d'un élément amortisseur disposé au-dessous de la surface de contact (48) de telle sorte qu'il permet un recul élastique de la surface de contact (48) en direction de la direction de chute du tube en verre (2), au-dessous du tube en verre (2),
- remplissage d'une chambre (66) compressible dans l'élément amortisseur avec un gaz, et
- largage du tube en verre (2).

8. Procédé selon la revendication de procédé précédente, dans lequel le remplissage avec un gaz comprend le réglage d'une pression prescrite au préalable dans la chambre (66) qui est définie à l'aide du poids du tube en verre (2).

9. Procédé selon l'une des revendications de procédé précédentes, dans lequel, après la préhension du tube en verre (2) sur la surface de contact (48), un échappement du gaz hors de la chambre (66) est effectué.

10. Procédé selon l'une des revendications de procédé précédentes, dans lequel, après la préhension du tube en verre (2) sur la surface de contact (48), la surface de contact (48) est fixée dans un état comprimé de la chambre (66).

11. Procédé selon la revendication de procédé précédente, dans lequel la fixation est effectuée à l'aide d'un aimant (69).

12. Procédé selon l'une des revendications précédentes, dans lequel la surface de contact (48), dans l'état comprimé de la chambre (66), est, après la préhension du tube en verre (2) sur la surface de contact (48), déplacée plus loin au moins dans la direction de la direction de chute du tube en verre (2), le tube en verre (2) étant préalablement fixé par un mandrin de retenue (70).

13. Machine de moulage à chaud (1) avec un préhenseur de tube (40) selon l'une des revendications 1 à 6.

14. Machine de moulage à chaud (1) selon la revendication 13, comprenant également une couronne de préchargement (76) disposée de façon rotative, avec une multiplicité de positions de chargement disposées en symétrie radiale pour la retenue de respectivement un tube en verre (2) placé verticalement,
un dispositif de retenue (80), pouvant être ouvert individuellement, pour le tube en verre (2) retenu dans la position de chargement respective étant prévu dans la couronne de préchargement (76) pour chacune des positions de chargement, et
un dispositif d'actionnement (86) affecté au préhenseur de tube (40) étant disposé dans la machine de moulage à chaud (1) et étant constitué pour l'ouverture du dispositif de retenue (80) de la position de chargement dont le tube en verre (2) retenu respectivement affleure avec la surface de contact (48) du préhenseur de tube (40) dans une position angulaire donnée de la couronne de préchargement (76).

15. Machine de moulage à chaud (1) selon la revendication 14, dans laquelle le dispositif de retenue (80) respectif comprend une plaque de retenue (88) pouvant pivoter sous une ouverture (78) et dans laquelle le dispositif d'actionnement (86) comprend un coulisseau (94) dont le mouvement éloigne par pivotement la plaque de retenue (88) sous l'ouverture (78).

16. Machine de moulage à chaud (1) selon la revendication 13 ou 14, dans laquelle la couronne de préchargement (76) comporte un certain nombre de positions de préchargement pour la retenue de respectivement un autre tube en verre (2) qui correspond au nombre de positions de chargement, une position de préchargement étant affectée à chaque position de chargement,
un dispositif de poussée (84) étant prévu dans la machine de moulage à chaud (1) et étant constitué pour pousser, au niveau d'une position angulaire donnée de la couronne de préchargement (76), un tube en verre (2) retenu dans une position de préchargement vers la position de chargement affectée à cette position de préchargement,
le dispositif de poussée (84) étant disposé en amont du dispositif d'actionnement (86) dans le sens de rotation de la couronne de préchargement (76).

17. Machine de moulage à chaud (1) selon la revendication 16, dans laquelle il est disposé un deuxième dispositif d'actionnement (82) qui est constitué pour la fermeture du dispositif de retenue (80) dans une position angulaire donnée de la couronne de préchargement (76), le deuxième dispositif d'actionnement (82) étant disposé entre le premier dispositif d'actionnement (86) et le dispositif de poussée (84) dans le sens de rotation de la couronne de préchargement (76).
